# EUROPEAN PATENT APPLICATION

(11) **EP 4 800 982 A1**
(43) Date of publication of application: **02.09.2026**
(21) Application number: 26158223.3
(22) Date of filing: 12.02.2026
(51) Int. Cl.: H04L 9/40, B60R 25/24, G07C 9/00, H04L 9/08, H04W 12/04

(54) **MANAGEMENT SERVER, DELETION MANAGEMENT METHOD, AND PROGRAM**

(30) Priority: 28.02.2025 JP 2025031971
(71) Applicant: Toyota Jidosha Kabushiki Kaisha, Toyota-shi, Aichi-ken 471-8571 (JP)
(72) Inventor: KOBAYASHI, Junya, Toyota-shi, 471-8571 (JP); HOMMA, Hiroki, Toyota-shi, 471-8571 (JP); MATSUMOTO, Satoshi, Toyota-shi, 471-8571 (JP); MURASE, Junji, Ohguchi-cho, 480-0195 (JP); MORI, Yuki, Ohguchi-cho, 480-0195 (JP); HASEGAWA, Yosuke, Ohguchi-cho, 480-0195 (JP)
(74) Representative: J A Kemp LLP

(57) **Abstract**

A management server, a deletion management method, and a program are provided. Under a condition in which a predetermined specified condition (RC) is satisfied (S64), server processing circuitry (71) deletes (S84, S85) a deletion subject digital key (DK2) and a digital key (DK3, DK4) registered based on the deletion subject digital key (DK2). The server processing circuitry (71) registers (S87) a new digital key (DKX) of the vehicle (20). The new digital key (DKX) is registered to a device (30C), to which the digital key (DK3) registered based on the deletion subject digital key (DK2) was registered. The deletion subject digital key is deleted under a condition in which the specified condition (RC) is satisfied (Fig. 10).

## Description

### CROSS-REFERENCE TO RELATED APPLICATIONS

This application is based upon and claims the benefit of priority from Japanese Patent Application No. 2025-031971, filed on February 28th, 2025, the entire contents of which are incorporated herein by reference.

### BACKGROUND

### 1. Field

The following description relates to a management server, a deletion management method, and a program.

### 2. Description of Related Art

JP2024-001720A describes a digital key management server. The management server is configured to manage multiple digital keys. The digital keys include a predetermined digital key and a digital key registered based on the predetermined digital key.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a management server including server processing circuitry is provided. The server processing circuitry is configured to manage multiple digital keys to a vehicle. Under a condition in which a predetermined specified condition is satisfied, the server processing circuitry is configured to delete a deletion subject digital key and a digital key registered based on the deletion subject digital key. The multiple digital keys include the deletion subject digital key and the digital key registered based on the deletion subject digital key. The server processing circuitry is configured to register a new digital key of the vehicle. The new digital key is registered to a device, to which the digital key registered based on the deletion subject digital key was registered. The deletion subject digital key is deleted under a condition in which the specified condition is satisfied.

In another general aspect, a deletion management method performed by a management server including a computer is provided. The computer includes server processing circuitry. The method includes managing, with the server processing circuitry, multiple digital keys to a vehicle. The method further includes deleting, with the server processing circuitry, under a condition in which a predetermined specified condition is satisfied, a deletion subject digital key and a digital key registered based on the deletion subject digital key. The multiple digital keys include the deletion subject digital key and the digital key registered based on the deletion subject digital key. The method further includes registering, with the server processing circuitry, a new digital key of the vehicle. The new digital key is registered to a device, to which the digital key registered based on the deletion subject digital key was registered. The deletion subject digital key is deleted under a condition in which the specified condition is satisfied.

In another general aspect, a program implemented by a non-transitory computer readable storage medium storing a program code that causes a computer to execute a deletion control process is provided. The computer includes server processing circuitry of a management server. The deletion management process includes managing, with the server processing circuitry, multiple digital keys to a vehicle. The deletion management process further includes deleting, with the server processing circuitry, under a condition in which a predetermined specified condition is satisfied, a deletion subject digital key and a digital key registered based on the deletion subject digital key. The multiple digital keys include the deletion subject digital key and the digital key registered based on the deletion subject digital key. The deletion management process further includes registering, with the server processing circuitry, a new digital key of the vehicle. The new digital key is registered to a device, to which the digital key registered based on the deletion subject digital key was registered. The deletion subject digital key is deleted under a condition in which the specified condition is satisfied.

With the above configurations, even when the digital key registered based on the deletion subject digital key is deleted, the new digital key is registered to the device to which the digital key registered based on the deletion subject digital key was registered. Therefore, the above-described management server, deletion management method, and a program avoid a situation in which the user of the digital key registered based on the deletion subject digital key becomes unable to use the vehicle.

Depending on the configuration of the management server, the digital key registered based on the deletion subject digital key may be deleted along with the deletion subject digital key when the specified condition is satisfied.

In this case, when the digital key registered based on the deletion subject digital key is deleted along with the deletion subject digital key, the user of the digital key registered based on the deletion subject digital key may become unable to use the vehicle. The configurations described above reduce such a risk.

Other features and aspects will be apparent from the following detailed description, the drawings, and the claims.

### BRIEF DESCRIPTION OF THE DRAWINGS

Fig. 1 is a schematic diagram of a management system in accordance with an embodiment.
Fig. 2 is a schematic diagram of owner key information in accordance with the embodiment.
Fig. 3 is a schematic diagram of shareable key information in accordance with the embodiment.
Fig. 4 is a schematic diagram of data stored in a database in accordance with the embodiment.
Fig. 5 is a diagram illustrating a series of processes executed by the management system to register an owner key in accordance with the embodiment.
Fig. 6 is a diagram illustrating a series of processes executed by the management system to register a friend key in accordance with the embodiment.
Fig. 7 is a diagram illustrating a series of processes executed by the management system to register a guest key in accordance with the embodiment.
Fig. 8 is a diagram illustrating a series of processes executed by the management system to perform key deletion management in accordance with the embodiment.
Fig. 9 is a flowchart illustrating details of a process executed by a management server to determine whether there is a replacement registration request in accordance with the embodiment.
Fig. 10 is a diagram illustrating a series of processes executed by the management system when there is a replacement registration request in accordance with the embodiment.
Fig. 11 is a diagram illustrating a series of processes executed by the management system when there is no replacement registration request in accordance with the embodiment.
Fig. 12 is a diagram illustrating a state of data in which a second digital key is deleted in accordance with the embodiment.
Fig. 13 is a diagram illustrating a state of data in which a third digital key is deleted and a new digital key is registered to a third device in accordance with the embodiment.
Fig. 14 is a diagram illustrating a state of data in which there is no replacement registration request in accordance with the embodiment.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

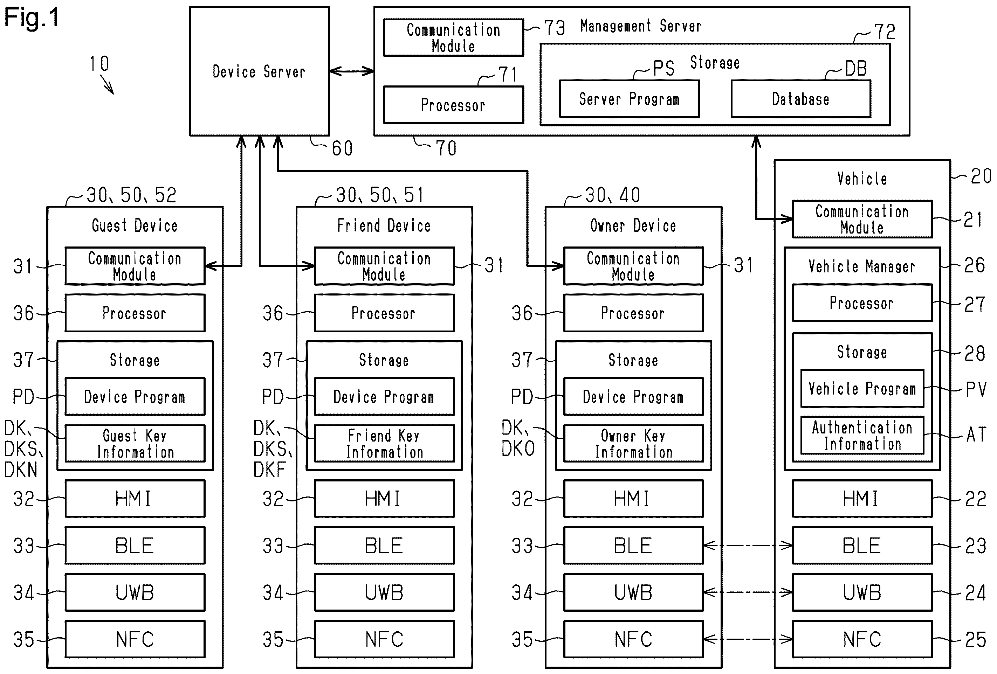

Figs. 1 to 14 illustrate a management system 10 including a management server 70 in accordance with an embodiment. The present embodiment provides a management server, a deletion management method, a storage medium, a program product, a program, and a deletion management process.

### Overview of Management System

As shown in Fig. 1, a management system 10 is configured to manage multiple digital keys enabled for a vehicle 20. The Car Connectivity Consortium (CCC) has established the standards for digital keys. The digital key-related aspects of the present embodiment are compliant with the CCC standards, and are also applicable to other standards or systems that do not use the CCC standards. The management system 10 includes the vehicle 20, multiple devices 30, a device server 60, and a management server 70.

The vehicle 20 includes a vehicle communication module 21, a vehicle human-machine interface (HMI) 22, a vehicle Bluetooth Low Energy (BLE) module 23, a vehicle ultra-wide band (UWB) module 24, a vehicle near-field communication (NFC) module 25, and a vehicle manager 26.

The vehicle communication module 21 is configured to communicate with the management server 70 through a wireless communication line. The vehicle HMI 22 includes an input device and a presentation device. When the input device receives an operation performed by a user of the vehicle 20, the input device inputs a signal indicating the operation to the vehicle 20. The presentation device is configured to present information to the user by images, sounds, or the like. The presentation device includes, for example, a monitor and a speaker.

The vehicle BLE module 23 is configured to perform short-range communication with the device 30 through BLE communication. The vehicle UWB module 24 is configured to communicate with the device 30 using UWB. The vehicle UWB module 24 is configured to measure a distance from the device 30 to the vehicle 20. The vehicle NFC module 25 is configured to perform short-range communication with the device 30 in accordance with NFC.

The vehicle manager 26 is installed in the vehicle 20. The vehicle manager 26 is configured to perform management related to the multiple digital keys to the vehicle 20. The vehicle manager 26 is, for example, a digital key electronic control unit (ECU). The vehicle manager 26 includes a vehicle processor 27 and vehicle storage 28. The vehicle storage 28 is vehicle memory that stores a vehicle program PV and authentication information AT. When the vehicle processor 27 runs the vehicle program PV, the vehicle program PV causes the vehicle processor 27 to store and/or delete the authentication information AT. The authentication information AT includes information used for authentication of a digital key so as to allow the digital key to control the vehicle 20. The authentication information AT is provided for each digital key for authentication. The vehicle processor 27 is a central processing unit (CPU); namely, vehicle processing circuitry. The vehicle processor 27 executes processing related to storage and deletion of the authentication information AT by running the vehicle program PV.

When the vehicle manager 26 authenticates a digital key, the vehicle manager 26 enables the authenticated digital key to control the vehicle 20. In an example, when the vehicle manager 26 authenticates a digital key, the vehicle manager 26 enables unlocking of the vehicle 20. In another example, when the vehicle manager 26 authenticates a digital key, the vehicle manager 26 enables starting of the vehicle 20.

The device 30 may be a portable information terminal, such as a smartphone. The device 30 includes a device communication module 31, a device HMI 32, a device BLE module 33, a device UWB module 34, a device NFC module 35, a device processor 36, and device storage 37.

The device communication module 31 is configured to communicate with the device server 60 through a wireless communication line. The device HMI 32 includes an input device and a presentation device. When the input device receives an operation performed by a user of the device 30, the input device inputs a signal indicating the operation to the device 30. The presentation device is configured to present information to the user by images, sounds, or the like. The presentation device includes, for example, a monitor and a speaker.

The device BLE module 33 is configured to perform short-range communication with the vehicle 20 through BLE communication. The device UWB module 34 is configured to communicate with the vehicle 20 using UWB. The device NFC module 35 is configured to perform short-range communication with the vehicle 20 in accordance with NFC.

The device storage 37 stores a device program PD and key information DK. When the device processor 36 runs the device program PD, the device program DP causes the device processor 36 to store and/or delete the key information DK. The key information DK includes information that indicates a digital key.

The device program PD includes, for example, a device application and a digital key framework. The device application includes an application used for storage and deletion of the key information DK. The digital key framework includes a program that provides the device 30 with a pairing functionality and a digital key sharing functionality through an application program interface (API) prepared in an operating system (OS). The device processor 36 executes processing related to storage and deletion of the key information DK by running the device program PD.

The devices 30 include an owner device 40 and multiple shareable devices 50. The owner device 40 stores owner key information DKO as the key information DK. The owner key information DKO indicates an owner key KO. Only a single owner key KO is allowed to be registered to a single vehicle 20. Accordingly, there is only one owner key KO for each vehicle 20.

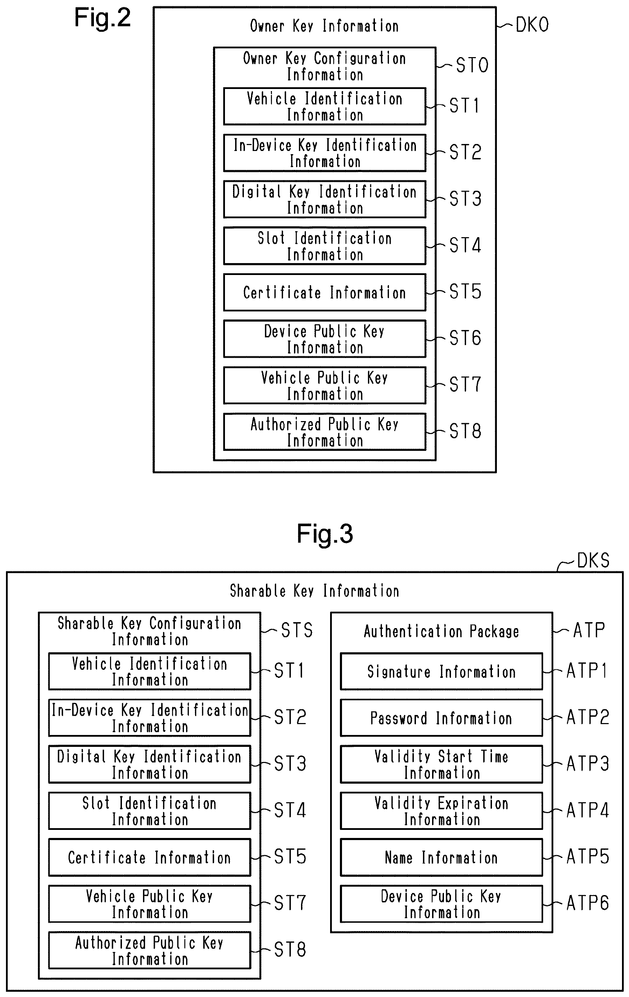

As shown in Fig. 2, the owner key information DKO includes owner key configuration information STO. The owner key configuration information STO includes vehicle identification information ST1, in-device key identification information ST2, digital key identification information ST3, and slot identification information ST4. The owner key configuration information STO includes certificate information ST5, device public key information ST6, vehicle public key information ST7, and authorized public key information ST8.

The vehicle identification information ST1 includes information that identifies the vehicle 20, for which the digital key is set. The vehicle identification information ST1 includes, for example, identification information (ID) of the vehicle 20.

The in-device key identification information ST2 is used to manage the digital key inside the device 30. The in-device key identification information ST2 includes information that allows for identification of the digital key inside an application of the device 30.

The digital key identification information ST3 is used to manage the digital key inside the management server 70. The slot identification information ST4 includes information that allows the digital key to be identified locally inside the device 30.

The certificate information ST5 indicates a certificate of the digital key. The device public key information ST6 indicates a device public key PKD, which is a public key of the device 30. The device public key PKD in the owner key information DKO indicates a public key of the owner device 40. The vehicle public key information ST7 indicates a vehicle public key PKV, which is a public key of the vehicle 20. The authorized public key information ST8 indicates a vehicle public key PKV that has already been authorized.

As shown in Fig. 1, the shareable device 50 stores shareable key information DKS as the key information DK. The sharable key information KS indicates a shareable key KS. Multiple shareable keys KS are allowed to be registered to a single vehicle 20 as available digital keys. Accordingly, there may be multiple shareable keys KS for each vehicle 20.

The shareable devices 50 include a friend device 51 and a guest device 52. The friend device 51 stores friend key information DKF as the shareable key information DKS. The friend key information DKF indicates a friend key KF. The guest device 52 stores guest key information DKN as the shareable key information DKS. The guest key information DKN indicates a guest key KN. The friend key KF and the guest key KN are different types of shareable key KS. As will be described later, the friend key KF is a shareable key KS registered in response to a direct registration request D21 from the owner device 40. As will be described later, the guest key KN is a shareable key KS registered in response to a registration request D31 from the friend device 51. That is, the guest key KN is a shareable key KS registered in response to a registration request from a shareable device 50 that is not the owner device 40.

A state in which a digital key is registered includes a state in which the digital key is enabled. Specifically, in a state in which a digital key is registered, the vehicle 20 stores the authentication information AT and the device 30 stores the key information DK.

As shown in Fig. 3, the shareable key information DKS includes shareable key configuration information STS and an authentication package ATP. The shareable key configuration information STS includes the vehicle identification information ST1, the in-device key identification information ST2, the digital key identification information ST3, and the slot identification information ST4. The shareable key configuration information STS further includes the certificate information ST5, the vehicle public key information ST7, and the authorized public key information ST8. Accordingly, the shareable key configuration information STS is equivalent to the owner key configuration information STO without the device public key information ST6.

The authentication package ATP includes signature information ATP1, password information ATP2, validity start time information ATP3, validity expiration information ATP4, name information ATP5, and device public key information ATP6.

The signature information ATP1 indicates that the shareable device 50 is an authorized entity for sharing a digital key. In a case of the friend device 51, for example, the signature information ATP1 indicates a signature of the owner device 40. The owner signature information indicates that the owner device 40 has signed the device public key PKD of the friend device 51, which is indicated by the device public key information ATP6. In a case of the guest device 52, for example, the signature information ATP1 indicates a signature of the friend device 51. The friend signature information indicates that the friend device 51 has signed the device public key PKD of the guest device 52, which is indicated by the device public key information ATP6.

The password information ATP2 indicates a pairing password PAS used to establish a secure channel between the vehicle 20 and the owner device 40 during a pairing process. The validity start time information ATP3 indicates the earliest date and time at which the shareable key KS becomes valid for use. The validity expiration information ATP4 indicates the latest date and time until which the shareable key KS remains valid for use. The name information ATP5 indicates a name that identifies the shareable key KS. The name information ATP5 includes, for example, an identifiable name set for each shareable device 50 by the owner device 40.

As shown in Fig. 1, the device server 60 is configured to relay communication between the device 30 and the management server 70. The device server 60 is provided for each type of device 30. Specifically, the device server 60 used for communication with a first type of device 30 differs from the device server 60 used for communication with a second type of device 30. In an example in which the type of device 30 includes the model of device 30, the device server 60 is provided for each model of device 30. In another example in which the type of device 30 includes the communication line the device 30 uses, the device server 60 may be provided for each communication line used by the device 30.

Each of the device servers 60 relays communication to the management server 70, so that different types of devices 30 can communicate with the management server 70 via the device servers 60. Fig. 1 shows only one device server 60.

### Management Server

The management server 70 is configured to manage multiple digital keys. The management server 70 is configured to communicate with the vehicle 20 and multiple devices 30. The management server 70 includes server processing circuitry 71, server storage 72, and a server communication module 73. The server communication module 73 is configured to communicate with the device server 60 through a wireless communication line. Further, the server communication module 73 is configured to perform wireless communication with the vehicle communication module 21 of the vehicle 20.

The server processing circuitry 71 and the server storage 72 are part of a computer. The server processing circuitry 71 is a CPU; namely, a server processor. The server storage 72 is memory. The server storage 72 stores a server program PS and a database DB. When the server processing circuitry 71 runs the server program PS, the server program PS causes the server processing circuitry 71 to register a digital key to the database DB and/or delete a digital key from the database DB. Further, when the server processing circuitry 71 runs the server program PS, the server program PS causes the server processing circuitry 71 to delete one or more digital keys.

In the database DB, each of the digital keys is associated with a corresponding vehicle 20 and a corresponding device 30 to which the digital key is registered. In the database DB, data blocks DA are divided according to the vehicle 20. In a state in which a digital key is registered, the device 30 that stores the key information DK indicating that digital key is stored in a corresponding data block DA in the management server 70.

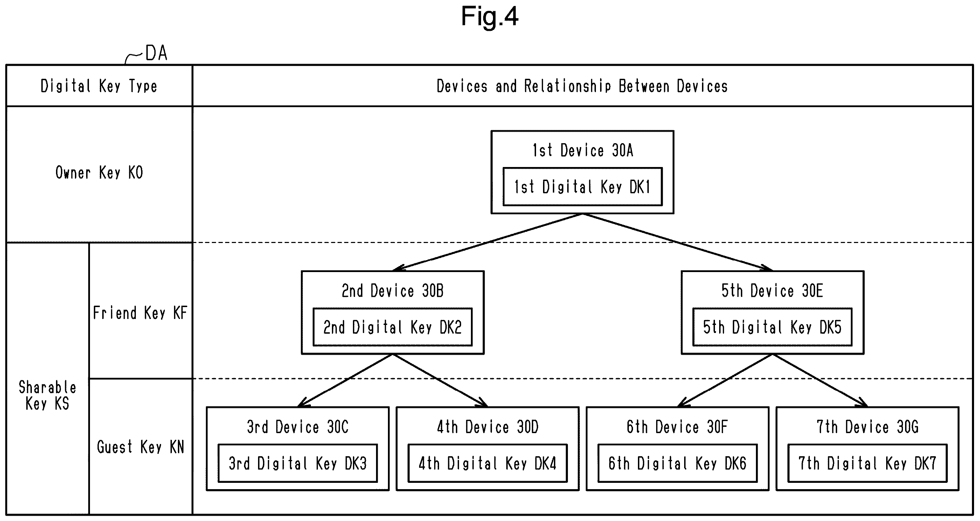

As shown in Fig. 4, the data block DA related to a single vehicle 20 stores types of the digital keys registered to the vehicle 20, the registered devices 30, and the relationship between the registered devices 30. The relationship between the devices 30 corresponds to relationships between individual digital keys registered to the devices 30. The type of digital key determines a priority level of that digital key. From highest to lowest in the hierarchy of priority, the owner key KO, the friend key KF, and the guest key KN are ranked in this order. A relatively high degree of authority is granted to a digital key having a relatively high priority level.

The authority granted to a digital key relates to, for example, the number of shareable keys KS that can be requested for registration based on the digital key, the scope of vehicle control that can be enabled through authentication of the digital key, or the like. Since a relatively high degree of authority is granted to a digital key having a relatively high priority level, for example, a greater number of shareable keys KS may be requested for registration by the digital key having a relatively high priority level. More specifically, for example, the number of friend keys KF that can be requested for registration by the owner device 40 is greater than the number of guest keys KN that can be requested for registration by the friend device 51.

Furthermore, since a relatively high degree of authority is granted to a digital key having a relatively high priority level, a broader scope of vehicle control may be permitted to the digital key having the relatively high priority level, for example. The scope of vehicle control includes, for example, a set of controllable functions, such as (a) starting the engine of the vehicle 20, (b) turning on the power of the vehicle 20, and (c) unlocking and locking the doors of the vehicle 20. In a case in which the scope of vehicle control includes, for example, all of the above three functions (a) to (c), the scope is broader than a case in which the scope of vehicle control includes only function (c): unlocking and locking the doors of the vehicle 20. More specifically, the friend key KF has a scope of vehicle control that includes all three functions (a) to (c) described above, and the guest key KN has a scope of vehicle control that is limited to only function (c): unlocking and locking the doors of the vehicle 20.

A state in which a digital key is registered to each of seven devices 30 with respect to the single vehicle 20 will now be described. The seven devices 30 will be referred to as first to seventh devices 30A to 30G. Further, the digital keys respectively registered to the first to seventh devices 30A to 30G will be referred to as first to seventh digital keys DK1 to DK7.

The data block DA indicates that the owner key KO is registered to the first device 30A. In other words, the first device 30A is the owner device 40. That is, the first digital key DK1 is the owner key KO.

The data block DA indicates that the shareable keys KS are respectively registered to the second device 30B, the third device 30C, the fourth device 30D, the fifth device 30E, the sixth device 30F, and the seventh device 30G. In other words, the second device 30B, the third device 30C, the fourth device 30D, the fifth device 30E, the sixth device 30F, and the seventh device 30G are the shareable devices 50. That is, the second to seventh digital keys DK2 to DK7 are all shareable keys KS.

More specifically, the data block DA indicates that the friend keys KF are respectively registered to the second device 30B and the fifth device 30E. In other words, the second device 30B and the fifth device 30E are the friend devices 51. The data block DA indicates that the guest keys KN are respectively registered to the third device 30C, the fourth device 30D, the sixth device 30F, and the seventh device 30G. In other words, the third device 30C, the fourth device 30D, the sixth device 30F, and the seventh device 30G are the guest devices 52.

The data block DA indicates that the second device 30B and the first device 30A have a relationship in which the friend key KF is registered to the second device 30B in response to a registration request from the first device 30A. That is, the second digital key DK2 is registered based on the first digital key DK1.

The data block DA indicates that the fifth device 30E and the first device 30A have a relationship in which the friend key KF is registered to the fifth device 30E in response to a registration request from the first device 30A. That is, the fifth digital key DK5 is registered based on the first digital key DK1.

The data block DA indicates that the third device 30C and the second device 30B have a relationship in which the guest key KN is registered to the third device 30C in response to a registration request from the second device 30B. That is, the third digital key DK3 is registered based on the second digital key DK2.

The data block DA indicates that the fourth device 30D and the second device 30B have a relationship in which the guest key KN is registered to the fourth device 30D in response to a registration request from the second device 30B. That is, the fourth digital key DK4 is registered based on the second digital key DK2.

The data block DA indicates that the sixth device 30F and the fifth device 30E have a relationship in which the guest key KN is registered to the sixth device 30F in response to a registration request from the fifth device 30E. That is, the sixth digital key DK6 is registered based on the fifth digital key DK5.

The data block DA indicates that the seventh device 30G and the fifth device 30E have a relationship in which the guest key KN is registered to the seventh device 30G in response to a registration request from the fifth device 30E. That is, the seventh digital key DK7 is registered based on the fifth digital key DK5.

As described above, the data block DA stores the devices 30 that are registered as digital keys. Further, the data block DA stores information indicating which device 30 issued a registration request that initiated registration of the devices 30. Such information is associated with each device 30 upon registration. Furthermore, the data block DA stores information indicating which digital key the digital keys are registered based on.

The management server 70 is configured to manage a limitation on a functionality of each digital key in accordance with the relationship between the multiple digital keys. For example, the management server 70 imposes a limitation on a functionality to delete other digital keys. When the management server 70 receives a request for implementation of various functionalities from the device 30, the management server 70 determines whether to accept the request based on the relationship between the digital key registered to the device 30 that is the source of the request and the digital key registered to the device 30 that is the subject of the request.

Since the management server 70 manages the limitations on the functionalities in accordance with the relationship between multiple digital keys, the device 30 may issue a deletion reservation request D41, which will be described later, to reserve deletion of one or more of the digital keys of which registration the device 30 was involved in. The deletion reservation request D41 requests deletion of a deletion subject digital key under a condition in which a deletion condition RC as a specified condition is satisfied. In other words, the deletion reservation request D41 reserves deletion of the deletion subject digital key until the deletion condition RC is satisfied. The deletion condition RC may be referred to as a specified condition. The deletion reservation may be referred to as a reserved deletion.

In an example, the first device 30A is capable of reserving deletion of the second to seventh digital keys DK2 to DK7. On the other hand, the first device 30A is incapable of reserving deletion of the first digital key DK1.

The second device 30B is capable of reserving deletion of the third digital key DK3 and the fourth digital key DK4. On the other hand, the second device 30B is incapable of reserving deletion of the first digital key DK1, the second digital key DK2, or the fifth to seventh digital keys DK5 to DK7. That is, the second device 30B can reserve digital key deletion for only the third device 30C and the fourth device 30D. The digital keys of the third device 30C and the fourth device 30D are registered based on the second device 30B. The second device 30B cannot reserve digital key deletion for the first device 30A, based on which the second device 30B is registered. The second device 30B cannot reserve digital key deletion for the second device 30B, or itself. The second device 30B cannot reserve digital key deletion for the fifth to seventh devices 30E to 30G, which are registered based on the first device 30A, separately from the second device 30B. the second device 30B, or the fifth to seventh devices 30E to 30G.

### Registration of Digital Key

A series of processes executed by the management system 10 to register a digital key will now be described. The management system 10 may register the owner key KO, the friend key KF, or the guest key KN. The description hereafter will illustrate an overall process that shifts a state in which no digital key is registered to a state in which at least one digital key is registered. Hereafter, the processing executed by the vehicle processor 27 will be described as the processing executed by the vehicle 20. The processing executed by the device processor 36 will be described as the processing executed by the device 30. The processing executed by the server processing circuitry 71 will be described as the processing executed by the management server 70.

### Registration of Owner Key

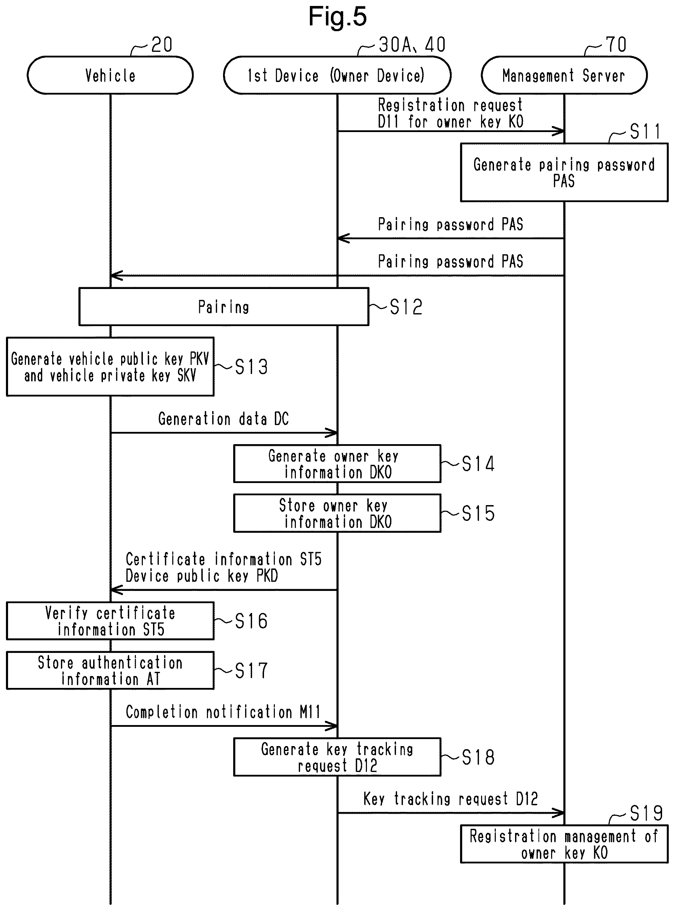

As illustrated in Fig. 5, the management system 10 executes a series of processes to register the owner key KO. In the present example, among the devices 30 that do not store the key information DK indicating the owner key KO, the first device 30A is designated to become the owner device 40.

When the management system 10 registers the owner key KO, the key information DK indicating the owner key KO is stored in the first device 30A. When the management system 10 registers the owner key KO, the authentication information AT that authenticates the owner key KO is stored in the vehicle 20. As a result, the first device 30A becomes the owner device 40. The present example assumes that appropriate applications have been installed in the first device 30A prior to the registration of the owner key KO.

When the management server 70 obtains a registration request D11 for the owner key KO from, for example, the first device 30A, the management server 70 starts the series of processes beginning from step S11. In step S11, the management server 70 generates the pairing password PAS. Then, the management server 70 transmits information indicating the pairing password PAS to the vehicle 20 and the first device 30A.

The vehicle 20 receives the pairing password PAS. When the vehicle 20 is switched to a pairing mode through the vehicle HMI 22 after receiving the pairing password PAS, the vehicle 20 stands by in a state in which the vehicle 20 can receive the password from the first device 30A. Then, the vehicle 20 proceeds to step S12.

In step S12, the vehicle 20 performs a pairing process with the first device 30A. When the pairing process is performed, the vehicle 20 establishes a secure channel for data transmission with the first device 30A. The pairing process is performed using the pairing password PAS sent from the management server 70 to the vehicle 20 and the first device 30A. When the pairing process is completed, the vehicle 20 proceeds to step S13.

In step S13, the vehicle 20 generates the vehicle public key PKV, which is a public key of the vehicle 20, and a vehicle private key SKV, which is a private key of the vehicle 20. Then, the vehicle 20 transmits generation data DC for generating the owner key KO to the first device 30A through the secure channel. The generation data DC includes the vehicle identification information ST1 and the vehicle public key information ST7 that indicates the vehicle public key PKV. The first device 30A receives the generation data DC. Then, the first device 30A proceeds to step S14.

In step S14, the first device 30A generates the owner key information DKO indicating the owner key KO. Then, the first device 30A proceeds to step S15.

In step S15, the first device 30A stores the owner key information DKO. As a result, the first device 30A becomes the owner device 40. Subsequently, the first device 30A transmits, to the vehicle 20, the certificate information ST5 related to the owner key KO, and the device public key information ST6 indicating the device public key PKD.

When the vehicle 20 receives the certificate information ST5 and the device public key information ST6, the vehicle 20 performs step S16. In step S16, the vehicle 20 verifies the certificate information ST5. When verification of the certificate information ST5 is completed, the vehicle 20 proceeds to step S17.

In step S17, the vehicle 20 stores the device public key information ST6, which indicates the device public key PKD, as the authentication information AT. Then, the vehicle 20 transmits, to the first device 30A, a completion notification M11 indicating that the authentication information AT has been stored.

When the first device 30A receives the completion notification M11, the first device 30A performs step S18. In step S18, the first device 30A generates a key tracking request D12 for the owner key KO. The key tracking request D12 is a signal that requests the management server 70 to update the database DB. The first device 30A transmits the key tracking request D12 for the owner key KO via the device server 60 to the management server 70.

When the management server 70 receives the key tracking request D12, the management server 70 performs step S19. In step S19, the management server 70 performs registration management of the owner key KO. Specifically, the management server 70 stores the first device 30A as the device 30 to which the owner key KO is registered in the data block DA of the database DB related to the vehicle 20. This ends the series of processes executed by the management system 10 to register the owner key KO.

### Registration of Friend Key

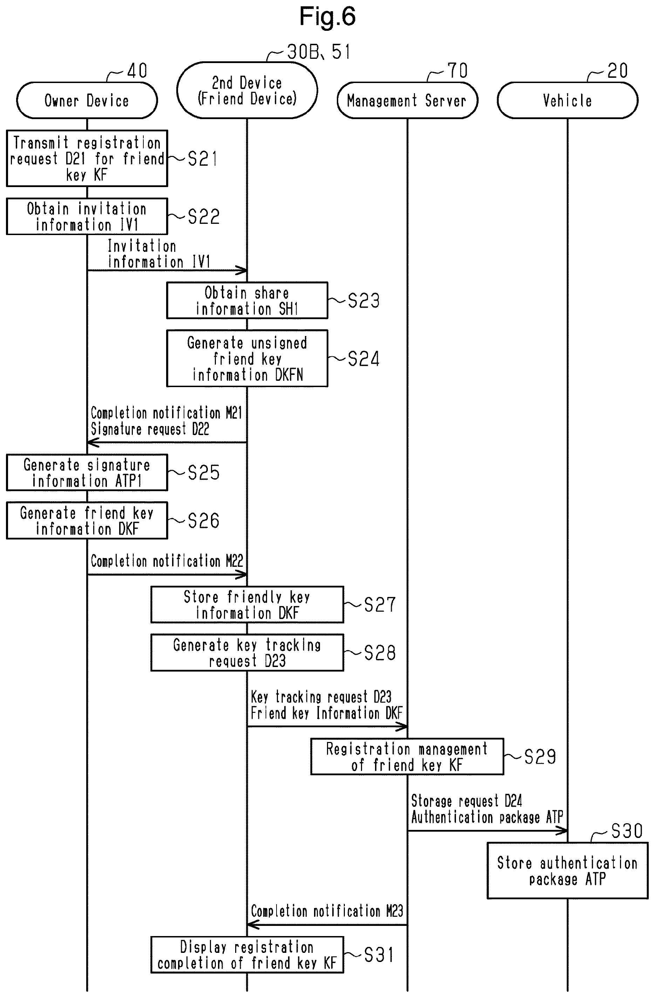

As illustrated in Fig. 6, the management system 10 executes a series of processes to register the friend key KF. In the present example, among the devices 30 that do not store the friend key information DKF, the second device 30B is designated to become the friend device 51 through the series of processes.

When the owner device 40 receives an operation that requests registration of the friend key KF, the owner device 40 starts the series of processes beginning from step S21. In step S21, the owner device 40 transmits the registration request D21 for the friend key KF to a relay server (not shown). Then, the owner device 40 proceeds to step S22.

In step S22, the owner device 40 obtains invitation information IV1 for sharing a digital key from the relay server. The invitation information IV1 includes, for example, a uniform resource locator (URL) link. Share information SH1 necessary for sharing the digital key can be obtained through the URL link. Then, the owner device 40 transmits the invitation information IV1 to the second device 30B.

When the second device 30B receives the invitation information IV1, the second device 30B performs step S23. In step S23, the second device 30B obtains the share information SH1 from the invitation information IV1. Specifically, the second device 30B downloads the share information SH1 through the URL link.

The share information SH1 includes, for example, the shareable key configuration information STS, the password information ATP2, the validity start time information ATP3, the validity expiration information ATP4, and the name information ATP5. The validity start time information ATP3, the validity expiration information ATP4, and the name information ATP5 are set by the owner device 40. Then, the second device 30B proceeds to step S24.

In step S24, the second device 30B generates unsigned friend key information DKFN using the share information SH1. The unsigned friend key information DKFN is the friend key information DKF without the signature information ATP1. Specifically, the second device 30B generates various types of information included in the obtained share information SH1 as various types of information of the unsigned friend key information DKFN. Then, the second device 30B transmits, to the owner device 40, a completion notification M21 indicating that the generated unsigned friend key information DKFN has been uploaded through the URL link, and a signature request D22 that requests a signature.

The owner device 40 receives the completion notification M21 and the signature request D22 from the second device 30B. When the owner device 40 receives the completion notification M21, the owner device 40 obtains the unsigned friend key information DKFN. When the owner device 40 receives the signature request D22, the owner device 40 performs step S25 in response to an operation performed on the owner device 40.

In step S25, the owner device 40 generates the signature information ATP1. More specifically, the owner device 40 causes the device HMI 32 to present the obtained unsigned friend key information DKFN, and accepts an operation indicating that the user of the owner device 40 has agreed to registration of the friend key KF. When the owner device 40 receives such an operation, the owner device 40 obtains a signature based on the performed operation. Then, the owner device 40 proceeds to step S26.

In step S26, the owner device 40 adds the signature information ATP1 to the unsigned friend key information DKFN. That is, the owner device 40 generates the friend key information DKF. Then, the owner device 40 uploads the generated friend key information DKF through the URL link included in the invitation information IV1. The owner device 40 transmits, to the second device 30B, a completion notification M22 indicating that the generated friend key information DKF has been uploaded through the URL link.

The second device 30B obtains the completion notification M22. Then, the second device 30B performs step S27. In step S27, the second device 30B downloads and stores the friend key information DKF. As a result, the second device 30B becomes the friend device 51. Subsequently, the second device 30B proceeds to step S28.

In step S28, the second device 30B generates a key tracking request D23 for the friend key KF. The second device 30B transmits the friend key information DKF and the key tracking request D23 for the friend key KF to the management server 70.

When the management server 70 receives the key tracking request D23 for the friend key KF, the management server 70 performs step S29. In step S29, the management server 70 performs registration management of the friend key KF.

Specifically, the management server 70 checks whether the friend key KF, which is the subject of the key tracking request D23, is included in a rejection list. The rejection list is a list of the shareable keys KS, including the friend keys KF and the guest keys KN, for which deletion requests have been received. When the subject friend key KF is included in the rejection list, the management server 70 transmits, to the second device 30B, a notification indicating that the key tracking request D23 cannot be accepted.

When the subject friend key KF of the received key tracking request D23 is not included in the rejection list, the management server 70 registers the subject friend key KF of the received key tracking request D23 to the database DB. More specifically, the management server 70 stores the second device 30B as the device 30 that is registered as the friend device 51 in the data block DA of the database DB related to the vehicle 20. The management server 70 stores the relationship between the second device 30B and the owner device 40 with reference to the obtained friend key information DKF.

Then, the management server 70 transmits, to the vehicle 20, the authentication package ATP included in the friend key information DKF, and a storage request D24 that requests storage of the authentication package ATP. That is, the management server 70 transmits, to the vehicle 20, the device public key information ST6 indicating the device public key PKD of the friend device 51. Also, the management server 70 notifies the vehicle 20 that the device public key PKD has been signed by the owner device 40.

When the vehicle 20 receives the storage request D24 and the authentication package ATP from the management server 70, the vehicle 20 performs step S30. In step S30, the vehicle 20 stores the received authentication package ATP as the authentication information AT used for authentication of the friend key KF.

After completing the registration management, the management server 70 transmits a completion notification M23 of the key tracking to the second device 30B.

When the second device 30B receives the completion notification M23 of the key tracking, the second device 30B performs step S31. In step S31, the second device 30B causes the device HMI 32 to present information indicating that the friend key KF has been registered. For example, the second device 30B causes the device HMI 32 to present an image indicating that the friend key KF has been registered. For example, the second device 30B causes the device HMI 32 to display an image indicating that the friend key KF has been registered. This ends the series of processes executed by the management system 10 to register the friend key KF.

### Registration of Guest Key

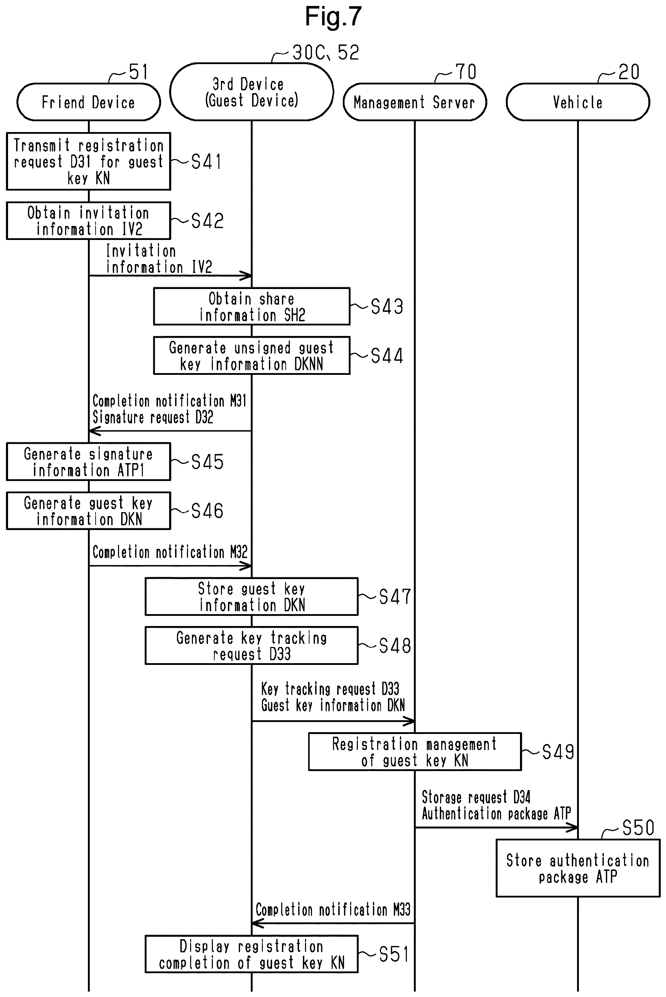

As illustrated in Fig. 7, the management system 10 executes a series of processes to register the guest key KN. In the present example, among the devices 30 that do not store the guest key information DKN, the third device 30C is designated to become the guest device 52 through the series of processes.

When the friend device 51 receives an operation that requests registration of the guest key KN, the friend device 51 starts the series of processes beginning from step S41. In step S41, the friend device 51 transmits the registration request D31 for the guest key KN to a relay server (not shown). Then, the friend device 51 proceeds to step S42.

In step S42, the friend device 51 obtains invitation information IV2 for sharing a digital key from the relay server. The invitation information IV2 includes, for example, a URL link. Share information SH2 necessary for sharing the digital key can be obtained through the URL link. Then, the friend device 51 transmits the invitation information IV2 to the third device 30C.

When the third device 30C receives the invitation information IV2, the third device 30C performs step S43. In step S43, the third device 30C obtains the share information SH2 from the invitation information IV2. Specifically, the second device 30B downloads the share information SH2 through the URL link.

The share information SH2 includes, for example, the shareable key configuration information STS, the password information ATP2, the validity start time information ATP3, the validity expiration information ATP4, and the name information ATP5. The validity start time information ATP3, the validity expiration information ATP4, and the name information ATP5 are set by the friend device 51. Then, the third device 30C proceeds to step S44.

In step S44, the third device 30C generates unsigned guest key information DKNN using the share information SH2. The unsigned guest key information DKNN is the guest key information DKN without the signature information ATP1. Specifically, the third device 30C generates various types of information included in the obtained share information SH2 as various types of information of the unsigned guest key information DKNN. Then, the third device 30C transmits, to the friend device 51, a completion notification M31 indicating that the generated unsigned guest key information DKNN has been uploaded through the URL link, and a signature request D32 that requests a signature.

The friend device 51 receives the completion notification M31 and the signature request D32 from the third device 30C. When the friend device 51 receives the completion notification M31, the friend device 51 obtains the unsigned guest key information DKNN. When the friend device 51 receives the signature request D32, the friend device 51 performs step S45 in response to an operation performed on the friend device 51.

In step S45, the friend device 51 generates the signature information ATP1. More specifically, the friend device 51 causes the device HMI 32 to present the obtained unsigned guest key information DKNN, and accepts an operation indicating that the user of the friend device 51 has agreed to registration of the guest key KN. When the friend device 51 receives such an operation, the friend device 51 obtains a signature based on the performed operation. Then, the friend device 51 proceeds to step S46.

In step S46, the friend device 51 adds the signature information ATP1 to the unsigned guest key information DKNN. That is, the friend device 51 generates the guest key information DKN. Then, the friend device 51 uploads the generated guest key information DKN through the URL link included in the invitation information IV2. The friend device 51 transmits, to the third device 30C, a completion notification M32 indicating that the generated guest key information DKN has been uploaded through the URL link.

The third device 30C obtains the completion notification M32. Then, the third device 30C performs step S47. In step S47, the third device 30C downloads and stores the guest key information DKN. As a result, the third device 30C becomes the guest device 52. Subsequently, the third device 30C proceeds to step S48.

In step S48, the third device 30C generates a key tracking request D33 for the guest key KN. The third device 30C transmits the guest key information DKN and the key tracking request D33 for the guest key KN to the management server 70.

When the management server 70 receives the key tracking request D33 for the guest key KN, the management server 70 performs step S49. In step S49, the management server 70 performs registration management of the guest key KN.

Specifically, the management server 70 checks whether the guest key KN, which is the subject of the key tracking request D33, is included in the rejection list. When the guest key KN is included in the rejection list, the management server 70 transmits, to the third device 30C, a notification indicting that the key tracking request D33 cannot be accepted.

When the guest key KN is not included in the rejection list, the management server 70 registers the subject guest key KN of the key tracking request D33 to the database DB. More specifically, the management server 70 stores the third device 30C as the device 30 that is registered as the guest device 52 in the data block DA of the database DB related to the vehicle 20. The management server 70 stores the relationship between the third device 30C and the friend device 51 with reference to the obtained guest key information DKN. Specifically, the management server 70 stores the third device 30C as the device 30 that has the guest key KN registered in response to the registration request D31 from the second device 30B.

Then, the management server 70 transmits, to the vehicle 20, the authentication package ATP included in the guest key information DKN, and a storage request D34 that requests storage of the authentication package ATP. That is, the management server 70 transmits, to the vehicle 20, the device public key information ST6 indicating the device public key PKD of the guest device 52. Also, the management server 70 notifies the vehicle 20 that the device public key PKD has been signed by the friend device 51.

When the vehicle 20 receives the authentication package ATP and the storage request D34, the vehicle 20 performs step S50. In step S50, the vehicle 20 stores the received authentication package ATP. Specifically, the vehicle 20 stores the authentication package ATP as the authentication information AT that authenticates the guest key KN.

After completing the registration management, the management server 70 transmits a completion notification M33 of the key tracking to the second device 30B.

When the second device 30B receives the completion notification M33 of the key tracking, the second device 30B performs step S51. In step S51, the third device 30C causes the device HMI 32 to present information indicating that the guest key KN has been registered. For example, the third device 30C causes the device HMI 32 to display an image indicating that the guest key KN has been registered. This ends the series of processes executed by the management system 10 to register the guest key KN.

### Key Deletion Management

A series of processes executed by the management system 10 to perform key deletion management will be described. The key deletion management includes deleting a deletion subject digital key and one or more digital keys that are registered based on the deletion subject digital key. The key deletion management further includes registering a new digital key DKX.

In the present embodiment, the deletion subject digital key is the second digital key DK2, which is the friend key KF. A series of processes related to the key deletion management for deleting the second digital key DK2 will be described below.

The description hereafter will illustrate an overall process that shifts a state in which the second digital key DK2 is registered to a state in which the second digital key DK2 is no longer registered. Hereafter, the processing executed by the vehicle processor 27 will be described as the processing executed by the vehicle 20. The processing executed by the device processor 36 will be described as the processing executed by the device 30. The processing executed by the server processing circuitry 71 will be described as the processing executed by the management server 70.

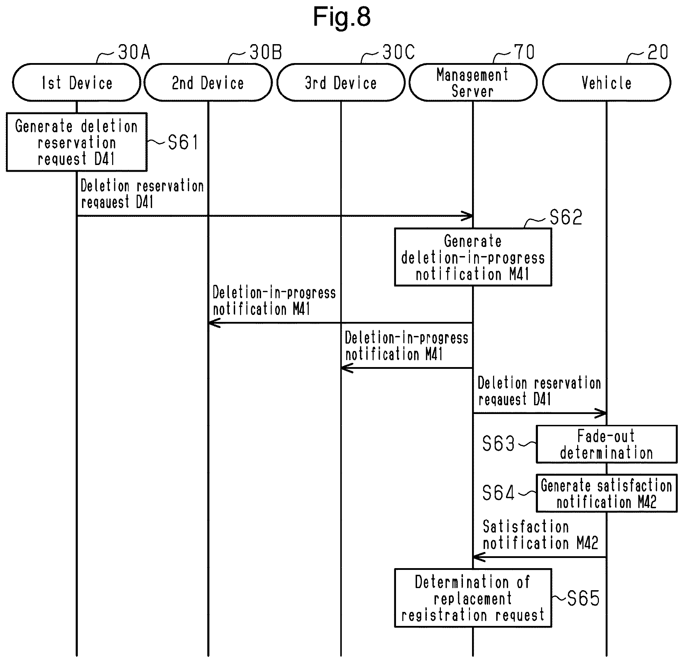

As illustrated in Fig. 8, when the first device 30A receives an operation that requests deletion of the second digital key DK2, the first device 30A starts the series of processes beginning from step S61. The step S61 generates the deletion reservation request D41 for the second digital key DK2. The deletion reservation request D41 requests deletion of the second digital key DK2 under a condition in which the deletion condition RC is satisfied. In other words, the deletion reservation request D41 reserves deletion of the deletion subject digital key until the deletion condition RC is satisfied. That is, the second digital key DK2 is the deletion subject digital key.

The deletion reservation request D41 includes the digital key identification information ST3 indicating the second digital key DK2, information indicating the deletion condition RC, and a signal requesting deletion of the second digital key DK2. The deletion condition RC is a condition for deleting the deletion subject digital key after the deletion reservation request D41 is received. The deletion condition RC is determined in advance. The deletion condition RC includes that the vehicle 20 authenticates at least one of the digital keys to the vehicle 20 that is different from the second digital key DK2, which is the deletion subject digital key. That is, according to the deletion condition RC, the deletion subject digital key is deleted when the vehicle 20 authenticates a digital key different from the deletion subject digital key. The first device 30A transmits the deletion reservation request D41 for the second digital key DK2 to the management server 70.

When the management server 70 receives the deletion reservation request D41 for the second digital key DK2, the management server 70 performs step S62. In step S62, the management server 70 generates a deletion-in-progress notification M41 indicating that deletion is in progress in accordance with the deletion reservation request D41.

The management server 70 transmits the deletion-in-progress notification M41 to the second device 30B, the third device 30C, and the fourth device 30D. The third device 30C and the fourth device 30D are the guest devices 52 to which the guest keys KN are respectively registered in response to a registration request from the second device 30B. The fourth device 30D is not shown in Fig. 8. Subsequently, the management server 70 transmits the deletion reservation request D41 to the vehicle 20.

When the vehicle 20 receives the deletion reservation request D41, the vehicle 20 performs step S63. In step S63, the vehicle 20 repeatedly performs a fade-out determination until it is determined that the deletion condition RC is satisfied. The vehicle 20 repeatedly performs the fade-out determination to determine whether the deletion condition RC is satisfied. Specifically, the vehicle 20 determines that the deletion condition RC is satisfied when the vehicle 20 authenticates at least one digital key that is different from the deletion subject digital key. When the vehicle 20 determines that the deletion condition RC is satisfied, the vehicle 20 proceeds to step S64.

In step S64, the vehicle 20 generates a deletion condition satisfaction notification M42 indicating that the deletion condition RC has been satisfied. Then, the vehicle 20 transmits the deletion condition satisfaction notification M42 to the management server 70.

When the management server 70 receives the deletion condition satisfaction notification M42, the management server 70 performs step S65. In step S65, the management server 70 determines whether there is a replacement registration request.

### Determination of Whether There Is a Replacement Registration Request

Details of the determination of whether there is a replacement registration request performed by the management server 70 will now be described.

In step S65, the server processing circuitry 71 repeatedly executes a series of processes to determine whether there is a replacement registration request. The server processing circuitry 71 executes this series of processes in predetermined cycles for a predetermined period.

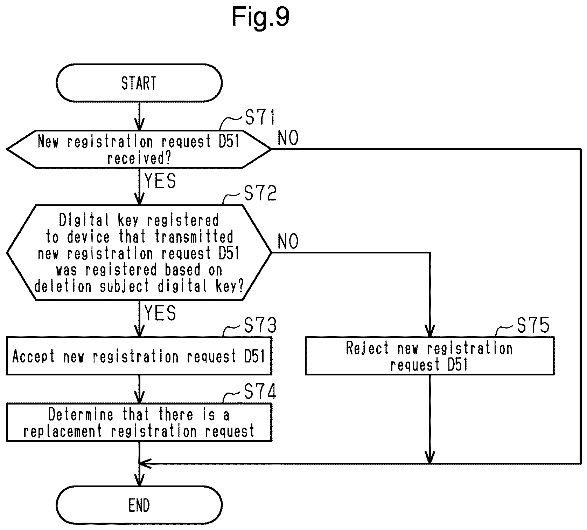

As illustrated in Fig. 9, the server processing circuitry 71 starts the series of processes for determining whether there is a replacement registration request beginning from step S71. In step S71, the server processing circuitry 71 determines whether a new registration request D51 is received. The registration request D51 corresponds to a replacement registration request. The determination in step S65 does not consider any registration request D51 that was previously received.

When the management server 70 does not receive the new registration request D51 (S71: NO), the server processing circuitry 71 ends this series of processes. When the management server 70 receives the new registration request D51 (S71: YES), the server processing circuitry 71 proceeds to step S72.

In step S72, the server processing circuitry 71 determines whether the device 30 that transmitted the new registration request D51 is the device 30 registering the digital key registered based on the digital key (DK2). In other words, step S72 determines whether the digital key registered to the device 30 that transmitted the new registration request D51 was registered based on the digital key (DK2). Specifically, the server processing circuitry 71 determines whether the device 30 that transmitted the new registration request D51 is the third device 30C or the fourth device 30D. The third device 30C and the fourth device 30D were registered based on the second digital key DK2.

When the digital key registered to the device 30 that transmitted the new registration request D51 was registered based on the deletion subject digital key (DK2) (S72: YES), the server processing circuitry 71 proceeds to step S73.

In step S73, the server processing circuitry 71 accepts (permits) the new registration request D51 received in step S71. Then, the server processing circuitry 71 proceeds to step S74.

In step S74, the server processing circuitry 71 determines that there is a replacement registration request. The replacement registration request requests registration of the new digital key DKX in replacement for the currently registered digital key. Then, the server processing circuitry 71 ends this series of processes.

When the digital key registered to the device 30 that transmitted the new registration request D51 was not registered based on the deletion subject digital key (S72: NO), the server processing circuitry 71 proceeds to step S75. More specifically, when the device 30 that transmitted the new registration request D51 is not the third device 30C or the fourth device 30D, to which the third digital key DK3 and the fourth digital key DK4 were registered based on the second digital key DK2 (S72: NO), the server processing circuitry 71 proceeds to step S75.

In step S75, the server processing circuitry 71 rejects the new registration request D51 received in step S71. The server processing circuitry 71 does not determine that there is a replacement registration request. That is, the server processing circuitry 71 determines that there is no replacement registration request. The server processing circuitry 71 ends this series of processes.

If the server processing circuitry 71 performs S74 even once during the predetermined period in which the server processing circuitry 71 repeatedly executes the series of processes, the server processing circuitry 71 determines that there is a replacement registration request. On the other hand, if the server processing circuitry 71 does not perform S74 even once during the predetermined period in which the server processing circuitry 71 repeatedly executes the series of processes, the server processing circuitry 71 determines that there is no replacement registration request. Subsequently, the server processing circuitry 71 ends step S65.

### Key Deletion Management When There Is a Replacement Registration Request

When the management server 70 determines that there is a replacement registration request, the management system 10 performs the key deletion management as follows. In the example below, the new registration request D51 was issued by the third device 30C.

In a case in which there is a replacement registration request, the management server 70 first deletes the deletion subject digital key under a condition in which the deletion condition RC is satisfied. Specifically, the management server 70 generates and transmits a deletion request for the second digital key DK2.

In a case in which there is a replacement registration request, the management server 70 deletes the deletion subject digital key and another digital key, as described below. Specifically, the management server 70 deletes, among the digital keys (DK3, DK4) registered based on the deletion subject digital key (DK2), the digital key currently registered to the device 30, to which the new digital key DKX is to be registered. Specifically, the management server 70 generates and transmits a deletion request for the third digital key DK3 without generating a deletion request for the fourth digital key DK4.

In a case in which there is a replacement registration request, the management server 70 registers the new digital key DKX to the device 30, to which a digital key was registered based on the deletion subject digital key. The deletion subject digital key is to be deleted under a condition in which the deletion condition RC is satisfied. Specifically, the management server 70 transmits a registration request for the new digital key DKX to the third device 30C.

In other words, in a case in which there is a replacement registration request, the management server 70 registers the new digital key DKX to the third device 30C that issued the new registration request D51. In contrast, the management server 70 does not register the new digital key DKX to the fourth device 30D that did not issue the new registration request D51. In this case, the second digital key DK2, which is the deletion subject digital key, is deleted. Although the third digital key DK3 is deleted from the third device 30C that issued the replacement registration request, the new digital key DKX is registered to the third device 30C. When the new digital key DKX replaces the second digital key DK2, the third device 30C replaces the second device 30B. The fourth digital key DK4 remains registered to the fourth device 30D, and no digital key is registered to the second device 30B.

Hereinafter, details of the key deletion management when there is a replacement registration request will be described.

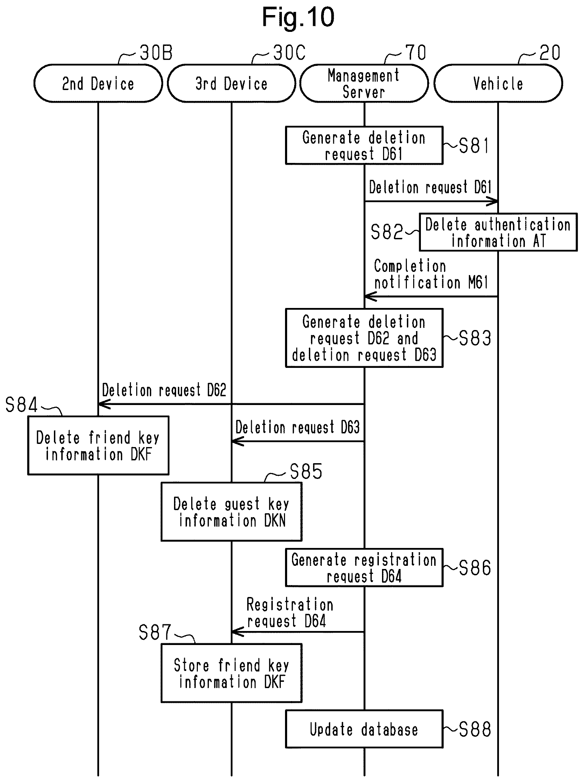

As shown in Fig. 10, in a case in which there is a replacement registration request, the management server 70 first performs step S81. In step S81, the management server 70 generates an authentication deletion request D61. The authentication deletion request D61 requests deletion of the authentication information AT that authenticates the deletion subject digital key. Specifically, the authentication deletion request D61 requests deletion of the authentication information AT of the second digital key DK2. Then, the management server 70 transmits the authentication deletion request D61 to the vehicle 20.

When the vehicle 20 receives the authentication deletion request D61, the vehicle 20 performs step S82. In step S82, the vehicle 20 deletes the authentication information AT of the second digital key DK2 in accordance with the authentication deletion request D61. Then, the vehicle 20 transmits an authentication deletion completion notification M61 to the management server 70. The authentication deletion completion notification M61 is a notification indicating that the authentication information AT of the second digital key DK2 has been deleted in accordance with the authentication deletion request D61.

When the management server 70 receives the authentication deletion completion notification M61, the management server 70 performs step S83. In step S83, the management server 70 generates a friend deletion request D62 and a guest deletion request D63.

The friend deletion request D62 requests deletion of the key information DK indicating the deletion subject digital key. Specifically, the friend deletion request D62 requests deletion of the key information DK indicating the second digital key DK2.

The guest deletion request D63 requests deletion of the key information DK indicating the digital key registered to the device 30 that transmitted the registration request D51. Specifically, the guest deletion request D63 requests deletion of the key information DK indicating the third digital key DK3.

Subsequently, the management server 70 transmits the friend deletion request D62 to the device 30 that stores the key information DK indicating the deletion subject digital key. Specifically, the management server 70 transmits the friend deletion request D62 to the second device 30B.

After the second device 30B receives the friend deletion request D62, the second device 30B performs step S84. In step S84, the second device 30B deletes, in accordance with the friend deletion request D62, the friend key information DKF indicating the second digital key DK2.

After transmitting the friend deletion request D62 to the second device 30B, the management server 70 transmits the guest deletion request D63 to the device 30 that transmitted the registration request D51. Specifically, the management server 70 transmits the guest deletion request D63 to the third device 30C.

After the third device 30C receives the guest deletion request D63, the third device 30C performs step S85. In step S85, the third device 30C deletes, in accordance with the guest deletion request D63, the guest key information DKN indicating the third digital key DK3.

After transmitting the guest deletion request D63, the management server 70 performs step S86. In step S86, the management server 70 generates a friend registration request D64. The friend registration request D64 requests storage of the key information DK indicating the new digital key DKX in the third device 30C. The new digital key DKX is registered to the third device 30C as a replacement for the third digital key DK3. The third digital key DK3 was indicated by the key information DK deleted in response to the guest deletion request D63.

When generating the friend registration request D64, the management server 70 also generates the key information DK indicating the new digital key DKX. The shareable key configuration information STS of the key information DK indicating the new digital key DKX corresponds to the shareable key configuration information STS included in the shareable key information DKS indicating the second digital key DK2. The authentication package ATP of the key information DK indicating the new digital key DKX corresponds to the authentication package ATP included in the shareable key information DKS indicating the third digital key DK3.

After the third device 30C receives the friend registration request D64, the third device 30C performs step S87. In step S87, the third device 30C stores, in accordance with the friend registration request D64, the key information DK indicating the new digital key DKX.

After transmitting the friend registration request D64, the management server 70 performs step S88. In step S88, the management server 70 updates the database DB. Specifically, the management server 70 updates the data block DA so that the relationship between the new digital key DKX and the other digital keys is equivalent of that between the second digital key DK2 and the other digital keys. As stated above, the second digital key DK2 is the deletion subject digital key.

Specifically, the data block DA is updated so that the relationship between the new digital key DKX and the fourth digital key DK4 is equivalent of that between the second digital key DK2 and the fourth digital key DK4. In other words, the data block DA indicates that the fourth digital key DK4 was registered in response to a registration request from the new digital key DKX.

In addition, the management server 70 updates the data block DA so that the new digital key DKX is granted with the same degree of authority as the second digital key DK2. Then, the management system 10 ends this series of processes for the key deletion management.

### Key Deletion Management When There Is No Replacement Registration Request

When the management server 70 determines that there is no replacement registration request, the management system 10 performs the key deletion management as follows.

In a case in which there is no replacement registration request, the management server 70 deletes the deletion subject digital key and all the digital keys registered based on the deletion subject digital key under a condition in which the deletion condition RC is satisfied. That is, the management server 70 deletes the second digital key DK2, and the third digital key DK3 and the fourth digital key DK4 registered based on the second digital key DK2.

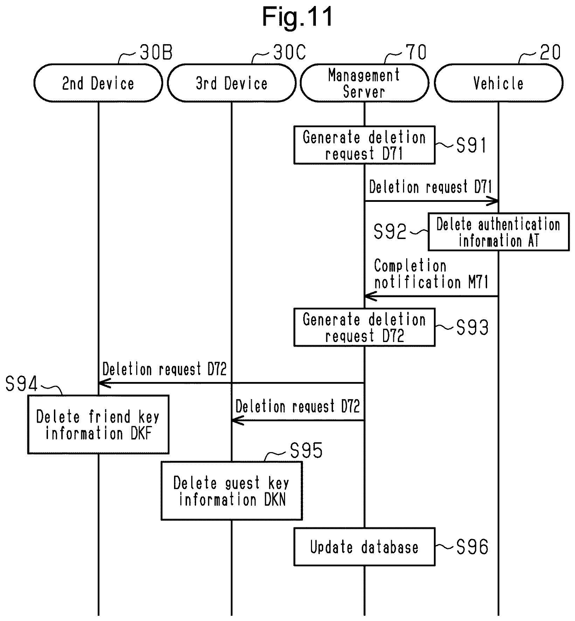

As shown in Fig. 11, in a case in which there is no replacement registration request, the management server 70 first performs step S91. In step S91, the management server 70 generates an authentication deletion request D71. The authentication deletion request D71 requests deletion of the authentication information AT that authenticates the deletion subject digital key and the authentication information AT that authenticates all the digital keys registered based on the deletion subject digital key.

Specifically, the authentication deletion request D71 requests deletion of the authentication information AT that authenticates the second digital key DK2, the authentication information AT that authenticates the third digital key DK3, and the authentication information AT that authenticates the fourth digital key DK4. Then, the management server 70 transmits the authentication deletion request D71 to the vehicle 20.

When the vehicle 20 receives the authentication deletion request D71, the vehicle 20 performs step S92. In step S92, the vehicle 20 deletes, in accordance with the authentication deletion request D71, the authentication information AT that authenticates the deletion subject digital key and the authentication information AT that authenticates all the digital keys registered based on the deletion subject digital key.

Specifically, the vehicle 20 deletes the authentication information AT that authenticates the second digital key DK2, the authentication information AT that authenticates the third digital key DK3, and the authentication information AT that authenticates the fourth digital key DK4. Then, the vehicle 20 transmits an authentication deletion completion notification M71 to the management server 70. The authentication deletion completion notification M71 is a notification indicating that the authentication information AT has been deleted in accordance with the authentication deletion request D71.

When the management server 70 receives the authentication deletion completion notification M71, the management server 70 performs step S93. In step S93, the management server 70 generates a key deletion request D72. The key deletion request D72 requests deletion of the key information DK indicating the deletion subject digital key and the key information DK indicating the digital keys registered based on the deletion subject digital key.

Specifically, the key deletion request D72 requests deletion of the key information DK indicating the second digital key DK2, the key information DK indicating the third digital key DK3, and the key information DK indicating the fourth digital key DK4. Then, the management server 70 transmits the key deletion request D72 to the second device 30B, the third device 30C, and the fourth device 30D.

When the second device 30B receives the key deletion request D72, the second device 30B performs step S94. In step S94, the second device 30B deletes, in accordance with the key deletion request D72, the friend key information DKF indicating the second digital key DK2.

When the third device 30C receives the key deletion request D72, the third device 30C performs step S95. In step S95, the third device 30C deletes, in accordance with the key deletion request D72, the guest key information DKN indicating the third digital key DK3.

Although not shown, when the fourth device 30D receives the key deletion request D72, the fourth device 30D deletes, in accordance with the key deletion request D72, the guest key information DKN indicating the fourth digital key DK4.

After transmitting the key deletion request D72, the management server 70 performs step S96. In step S96, the management server 70 updates the database DB. Specifically, the management server 70 deletes the second to fourth digital keys DK2 to DK4 and the second to fourth devices 30B to 30D from the data block DA. Then, the management system 10 ends this series of processes for the key deletion management for a case in which there is no replacement registration request.

In the present embodiment, the server processing circuitry 71 runs the server program PS to perform steps S81, S83, and S86 and transmit the requests generated in these steps. That is, the server processing circuitry 71 is a server processor that performs the deletion management method and the deletion management process. Further, the server program PS is a program or a program code that causes the server processing circuitry 71 to perform the deletion management method and the deletion management process.

### Operation of the Embodiment

When the management system 10 performs the key deletion management, the data block DA stored in the management server 70 is changed as follows.

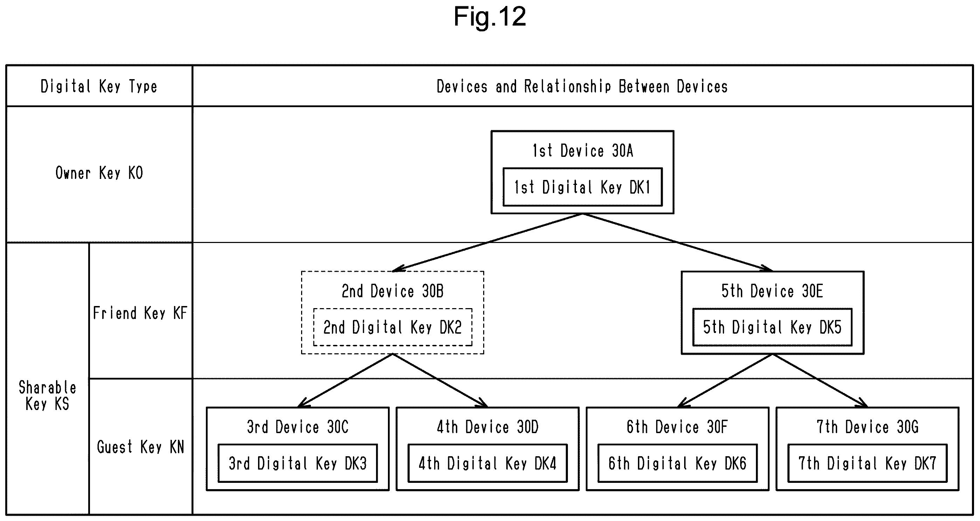

As shown in Fig. 12, the management system 10 deletes the key information DK indicating the second digital key DK2 in response to the friend deletion request D62 or the key deletion request D72. Accordingly, the second digital key DK2 is deleted when the data block DA is updated.

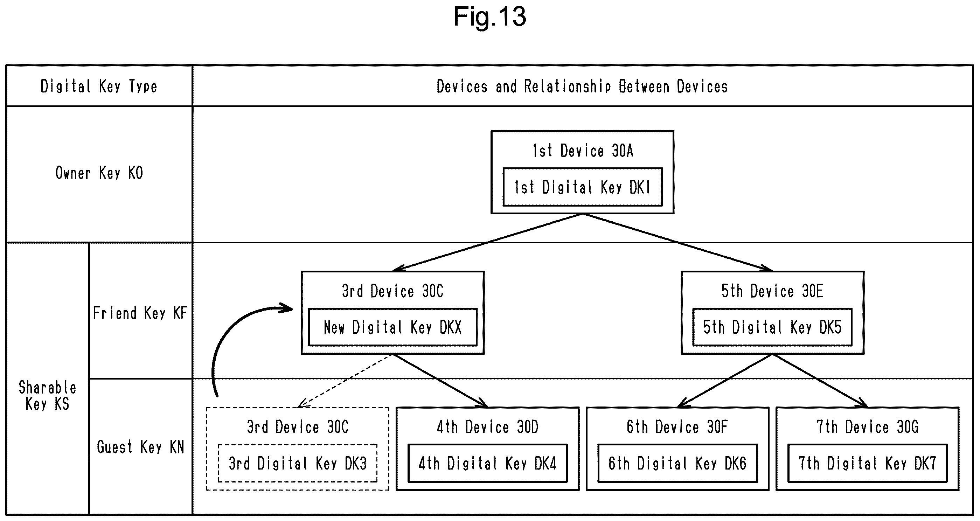

As shown in Fig. 13, when there is a replacement registration request, the management system 10 deletes the third digital key DK3 in response to the guest deletion request D63. Subsequently, the management system 10 registers the new digital key DKX to the third device 30C in response to the friend registration request D64. The relationship between the new digital key DKX and the fourth digital key DK4 is equivalent of that between the second digital key DK2 and the fourth digital key DK4. Also, the new digital key DKX is granted with the same degree of authority as the second digital key DK2. Thus, in a case in which there is a replacement registration request, the key deletion management updates the data block DA so that the second digital key DK2 registered to the second device 30B is replaced by the new digital key DKX registered to the third device 30C. That is, when the new digital key DKX replaces the second digital key DK2, the third device 30C replaces the second device 30B.

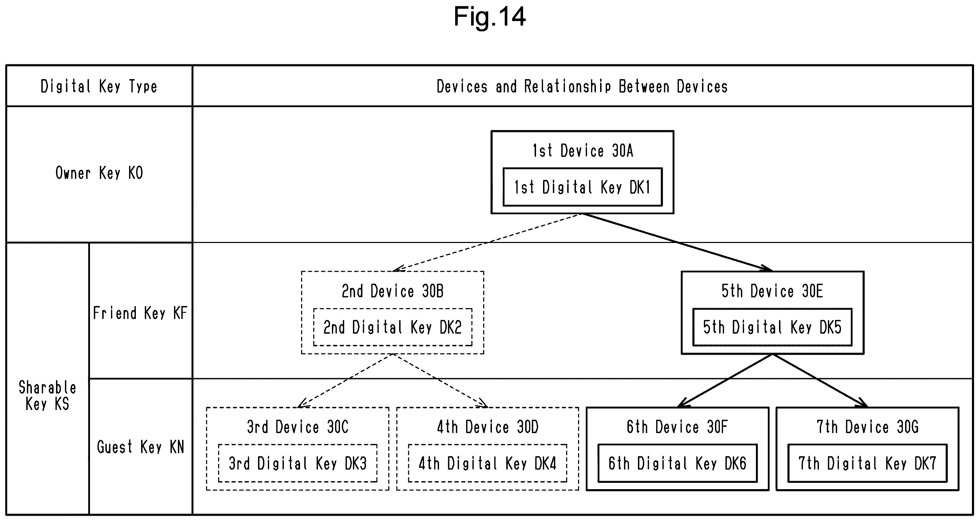

As shown in Fig. 14, when there is no replacement registration request, the management system 10 deletes the second digital key DK2, the third digital key DK3, and the fourth digital key DK4, in response to the deletion request D73.

### Advantages of the Embodiment

(1) The management server 70 deletes the second digital key DK2 and the third digital key DK3 under a condition in which the deletion condition RC is satisfied. In a case in which there is a replacement registration request from the third device 30C, the management server 70 registers the new digital key DKX to the third device 30C, to which the third digital key DK3 was registered.
   Therefore, even when the third digital key DK3 is deleted, the new digital key DKX is registered to the third device 30C. This allows the management server 70 to avoid a situation in which the user of the third device 30C becomes unable to use the vehicle 20.
(2) When deleting the second digital key DK2 under a condition in which the deletion condition RC is satisfied, the management server 70 deletes the third digital key DK3 registered to the third device 30C that transmitted the replacement registration request, without deleting the fourth digital key DK4. This allows the management server 70 to avoid a situation in which the user of the fourth device 30D becomes unable to use the vehicle 20.
(3) The management server 70 does not register the new digital key DKX to the fourth device 30D that did not transmit the new registration request D51. Instead, the management server 70 registers the new digital key DKX to the third device 30C that transmitted the new registration request D51. This allows the management server 70 to avoid registering an excessive number of new digital keys DKX.
(4) The new digital key DKX is granted with the same degree of authority as the second digital key DK2. Therefore, even when the second digital key DK2 is deleted, the functions of the vehicle 20 may be continuously implemented.
(5) The management server 70 manages the limitation on the functionality of each digital key in accordance with the relationship between the multiple digital keys. When registering the new digital key DKX, the management server 70 updates the data block DA so the relationship between the fourth digital key DK4 and the new digital key DKX is equivalent of that between the fourth digital key DK4 and the second digital key DK2. In this manner, the management server 70 continuously manages the functionality of each digital key, so that even after the new digital key DKX is registered, the fourth digital key DK4 may implement the same functionality as when the second digital key DK2 was registered.
(6) In a case in which the vehicle 20 is used as a rental car or a shared car, the user of the vehicle 20 may be switched, for example, from the user of the second device 30B to the user of the fifth device 30E. The deletion condition RC includes that the vehicle 20 authenticates at least one (for example, fifth digital key DK5) of the digital keys that is different from the deletion subject digital key (second digital key DK2).

Accordingly, the pre-switch deletion subject digital key will be deleted when a new post-switch digital key is authenticated. Specifically, when the vehicle 20 authenticates, for example, any of the fifth digital key DK5 to the seventh digital key DK7, at least one of the second digital key DK2 to the fourth digital key DK4 will be deleted. This allows the management server 70 to delete the pre-switch digital key simultaneously with the switch of the users.

### Modified Examples

The above-described embodiment may be modified as follows. The above embodiment and the following modifications can be combined as long as the combined modifications remain technically consistent with each other.

### Management System

The vehicle 20 does not have to include one or more of the vehicle BLE module 23, the vehicle UWB module 24, and the vehicle NFC module 25. The vehicle 20 can perform short-range communication with the device 30 as long as the vehicle 20 includes at least one of the above modules. There is no limitation to those modules listed above, and the vehicle 20 may include any module that is configured to perform short-range communication with the device 30.

The digital keys may be authenticated by an ECU that is different from the vehicle manager 26 and is installed in the vehicle 20.

The digital key-related aspects of the above embodiment do not have to be compliant with the CCC standard.

The vehicle manager 26 does not have to be a digital key ECU. The vehicle manager 26 may be, for example, a central ECU that manages multiple ECUs of the vehicle 20 in a centralized manner.

The device 30 is not limited to a smartphone. The device 30 may be a smart watch. The device 30 may be a predetermined server. In this case, the predetermined server may include the device 30. For example, when the owner of the vehicle 20 is a rental-car service provider or a car-sharing service provider, the owner device 40 may be included in the predetermined server. Also, the friend device 51 may be included in the predetermined server.

In the above embodiment, the owner key KO, the friend key KF, and the guest key KN are ranked in the hierarchy of priority in this order, and a relatively high degree of authority is granted to a digital key having a relatively high priority level. A relatively high degree of authority does not have to be granted to a digital key having a relatively high priority devel. For example, the same degree of authority may be granted to the owner key KO, the friend key KF, and the guest key KN, having three different priority levels.

As described in the above embodiment, the shareable device 50 has a functionality of receiving a shareable key KS. The device 30 having a functionality of receiving a digital key, such as the shareable device 50, may be referred to as a receiver device.

As long as wireless communication can be performed between multiple devices 30 and the management server 70, a separate device server 60 does not have to be provided for each type of device 30. As long as wireless communication can be performed directly between multiple devices 30 and the management server 70, the device server 60 may be omitted.

The management server 70 may include multiple servers. In an example, the management server 70 may include a server that stores the database DB and a server that executes the server program PS. In another example, the management server 70 may include a server that communicates with the vehicle 20 and a server that communicates with the device server 60. These servers may be configured to communicate with each other.

The functionality that the management server 70 manages in accordance with the relationship between multiple digital keys is not limited to transmission of the deletion reservation request D41. In an example, the management server 70 may manage a limitation on the types of digital keys displayed on the device HMI 32 of the device 30, to which a corresponding digital key is registered. In another example, the management server 70 may manage a limitation on transmission of the deletion request for a digital key.

The management server 70 does not have to store the database DB. The management server 70 may only manage a combination of the key information DK of the device 30 and the authentication information AT of the vehicle manager 26 for at least one digital key included in the management system 10.

The management server 70 may be (a) circuitry including one or more processors that execute various processes in accordance with computer programs (software), (b) circuitry including one or more dedicated hardware circuits, such as an application specific integrated circuit (ASIC), that execute at least part of various processes, or (c) circuitry including a combination of the above. The processor includes a CPU and memory, such as random-access memory (RAM), read-only memory (ROM), or the like. The memory stores program codes or instructions configured to cause the CPU to execute processes. The memory, which is a non-transitory computer-readable storage medium, may include any type of media that is accessible by a general-purpose computer or a dedicated computer. The same applies to the vehicle manager 26 and the device 30.

When a digital key is deleted, the digital key shifts from an enabled state to a disabled state. In the above embodiment, a digital key is shifted to a disabled state by deleting either corresponding authentication information AT or corresponding key information DK.

Accordingly, deleting a digital key corresponds to deleting at least one of the authentication information AT related to the digital key stored in the vehicle manager 26, and the key information DK related to the digital key stored in the device 30. When deleting both the authentication information AT and the key information DK, the digital key is deleted at a point in time at which either one of the authentication information AT or the key information DK is deleted first.

### Various Types of Information

The information related to a digital key stored in the vehicle manager 26 is not limited to the authentication information AT, and may include any information related to the digital key. For example, information related to a digital key may include information that identifies the digital key.

The information related to a digital key stored in the device 30 is not limited to the key information DK, and may include any information related to the digital key. For example, information related to a digital key may include information that identifies the digital key.

As described in the above embodiment, the information related to a digital key stored in the vehicle manager 26 may differ from the information related to the digital key stored in the device 30. Alternatively, the information related to a digital key stored in the vehicle manager 26 may be the same as the information related to the digital key stored in the device 30.

As long as the authentication information AT authenticates a digital key when the digital key is used, the authentication information AT is not limited to the example described in the above embodiment. In an example, the authentication information AT may be a common key shared by the vehicle manager 26 and the device 30. In another example, the authentication information AT may be a common private key.

The configuration of information included in the key information DK is not limited to the example described in the above embodiment. In an example, the owner key information DKO does not have to include the slot identification information ST4. In another example, the key information DK may include information indicating the type of digital key. The information indicating the type of digital key includes, for example, information indicating one of the owner key KO, the friend key KF, and the guest key KN.

The database DB may include information indicating the type of device 30. The information indicating the type of device 30 includes, for example, information indicating any of a smartphone, a smartwatch, a predetermined server described in the above modified example, or the like.

The configuration of the data block DA in the database DB is not limited to the example described in the above embodiment. The database DB may only store information necessary for the management server 70 of the management system 10 to perform management.

In the database DB, the digital keys of the same type do not have to be granted with the same degree of authority, and the degree of authority may vary between individual digital keys. Alternatively, in the database DB, authority does not have to be granted to any digital key.

### Registration of Digital Key

The series of processes for registering the owner key KO is not limited to example described in the above embodiment. For example, the owner device 40 does not have to perform the pairing process of step S12, and may store the owner key information DKO through exchange of information, such as the generation data DC, between the vehicle 20 and the first device 30A via the management server 70. The series of processes for registering the owner key KO may be modified in accordance with the configuration of the information included in the owner key information DKO and the configuration of the information included in the authentication information AT.

The series of processes for registering the friend keys KF is not limited to the example described in the above embodiment. For example, the management server 70 may update the database DB in step S29 after transmitting the authentication package ATP and the storage request D24 to the vehicle 20. The series of processes for registering the friend key KF may be modified in accordance with the configuration of the information included in the friend key information DKF and the configuration of the information included in the authentication information AT.

The series of processes for registering the guest key KN is not limited to the example described in the above embodiment. The sequence of the series of processes for registering the guest key KN may differ from the sequence of the series of processes for registering the friend key KF. The series of processes for registering the guest key KN may be modified in accordance with the configuration of the information included in the guest key information DKN and the configuration of the information included in the authentication information AT.

The guest key KN does not have to be a type of digital key. That is, the friend key KF may be the only shareable key KS in the management system 10.

The guest device 52 may be configured to transmit a request for registration of a new guest key KN. In other words, the shareable device 50 may transmit a request for registration of a new guest key KN, regardless of whether the shareable device 50 is the friend device 51 or the guest device 52. In this case, the management system 10 may register the new guest key KN through the series of processes illustrated in Fig. 7.

The deletion subject digital key is not limited to the second digital key DK2, which is the friend key KF. In an example, when a new guest key KN is registered based on the third digital key DK3, as described in the above modified example, the deletion subject digital key may be the third digital key DK3.

The digital keys to the vehicle 20 do not have to include multiple digital keys registered based on the deletion subject digital key. For example, the fourth digital key DK4 does not have to be registered based on the deletion subject digital key.

### Deletion Reservation Request

The deletion reservation request D41 does not have to be generated by the device 30. The management server 70 or the vehicle 20 may generate the deletion reservation request D41.

The device 30 may be configured to generate the deletion reservation request D41 for a digital key of which registration the device 30 was not involved in. For example, the second device 30B may generate the deletion reservation request D41 for the fifth digital key DK5.

### Fade-Out Determination

The deletion condition RC is not limited to that the vehicle 20 authenticates a digital key that is different from the deletion subject digital key. For example, the deletion condition RC may be that a predetermined period elapses from when the deletion reservation request D41 was received.

### Key Deletion Management When There Is a Replacement Registration Request

The new digital key DKX does not have to replace the digital key registered to the device 30 that issued the new registration request D51. For example, the digital key to be replaced by the new digital key DKX may be determined before the management server 70 receives the deletion reservation request D41.

The deletion subject digital key is deleted under a condition in which the deletion condition RC is satisfied. In this case, the management server 70 may delete, among the digital keys registered based on the deletion subject digital key, any digital key registered to the device 30 to which the new digital key DKX is not to be registered. For example, the management server 70 may delete the fourth digital key DK4 when deleting the second digital key DK2.

The management server 70 may register the new digital key DKX to the device 30 that did not receive the registration request for the new digital key DKX. Specifically, when the management server 70 issues the registration request for the new digital key DKX, the management server 70 may delete the third digital key DK3 and the fourth digital key DK4 and register the new digital keys DKX to the third device 30C and the fourth device 30D.

In the series of processes illustrated in Fig. 10, the management server 70 may perform step S81 after steps S83 and S86. That is, the management server 70 may delete the authentication information AT after deleting and registering the key information DK.

### Data Update

The new digital key DKX does not have to be granted with the same degree of authority as the deletion subject digital key. That is, the new digital key DKX does not have be granted with the same degree of authority as the second digital key DK2. For example, the new digital key DKX may be granted with the same degree of authority as the owner key KO. The new digital key DKX may be granted with the same degree of authority as the third digital key DK3.

When registering the new digital key DKX, the management server 70 does not have to update the data block DA to indicate that the relationship between the fourth digital key DK4 and the new digital key DKX is equivalent of that between the fourth digital key DK4 and the second digital key DK2.

The server storage 72 does not have to store the data block DA that indicates the relationship between the multiple digital keys. The management server 70 does not have to manage the limitation on the functionality of each digital key in accordance with the relationship between the multiple digital keys.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A management server, comprising:
server processing circuitry (71), wherein
the server processing circuitry (71) is configured to manage multiple digital keys to a vehicle (20),
under a condition in which a predetermined specified condition (RC) is satisfied (S64), the server processing circuitry (71) is configured to delete (S84, S85) a deletion subject digital key (DK2) and a digital key (DK3) registered based on the deletion subject digital key (DK2), the multiple digital keys including the deletion subject digital key and the digital key registered based on the deletion subject digital key, and
the server processing circuitry (71) is configured to register (S87) a new digital key (DKX) of the vehicle (20), the new digital key (DKX) being registered to a device (30C), to which the digital key (DK3) registered based on the deletion subject digital key (DK2) was registered, the deletion subject digital key (DK2) being deleted under a condition in which the specified condition (RC) is satisfied.

2. The management server according to claim 1, wherein
the digital key registered based on the deletion subject digital key (DK2) is one of digital keys (DK3, DK4) registered based on the deletion subject digital key (DK2), and
when deleting the deletion subject digital key (DK2) under a condition in which the specified condition (RC) is satisfied,
the server processing circuitry (71) is configured to not delete, among the digital keys (DK3, DK4) registered based on the deletion subject digital key (DK2), any digital key registered to a device (30D), to which the new digital key (DKX) is not to be registered, and
the server processing circuitry (71) is configured to delete (S85), among the digital keys (DK3, DK4) registered based on the deletion subject digital key (DK2), a corresponding digital key (DK3) registered to the device (30C) to which the new digital key (DKX) is to be registered.

3. The management server according to claim 1 or 2, wherein
the digital key registered based on the deletion subject digital key (DK2) is one of digital keys (DK3, DK4) registered based on the deletion subject digital key (DK2),
the server processing circuitry (71) is configured to not register the new digital key (DKX) to one or more devices (30D) that did not issue a registration request for the new digital key (DKX), and
the server processing circuitry (71) is configured to register (S87) the new digital key (DKX) to a device (30C) that issued the registration request for the new digital key (DKX).

4. The management server according to any one of claims 1 to 3, wherein the new digital key (DKX) is granted with a same degree of authority ((a) to (c)) as the deletion subject digital key (DK2).

5. The management server according to any one of claims 1 to 4, further comprising:
storage (72) that stores data (DB) indicating a relationship between the multiple digital keys, wherein
the server processing circuitry (71) is configured to manage a limitation on a functionality of each of the multiple digital keys in accordance with the relationship between the multiple digital keys,
the digital key registered based on the deletion subject digital key (DK2) is one of digital keys (DK3, DK4) registered based on the deletion subject digital key (DK2), and
when registering the new digital key (DKX), the server processing circuitry (71) is configured to update the data (DB) so that a relationship between the new digital key (DKX) and any (DK4) of the digital keys (DK3, DK4) registered based on the deletion subject digital key (DK2) that is registered to a device (30D), to which the new digital key (DKX) was not registered, is equivalent of a relationship between the deletion subject digital key (DK2) and any (DK4) of the digital keys (DK3, DK4) registered based on the deletion subject digital key (DK2) that is registered to the device (30D), to which the new digital key (DKX) was not registered.

6. The management server according to any one of claims 1 to 5, wherein the specified condition (RC) includes that the vehicle (20) authenticates any of the multiple digital keys that is different from the deletion subject digital key (DK2).

7. A deletion management method performed by a management server (70) including a computer, the computer including server processing circuitry (71), the method comprising:
managing, with the server processing circuitry (71), multiple digital keys to a vehicle (20);
deleting (S84, S85), with the server processing circuitry (71), under a condition in which a predetermined specified condition (RC) is satisfied (S64), a deletion subject digital key (DK2) and a digital key (DK3) registered based on the deletion subject digital key (DK2), the multiple digital keys including the deletion subject digital key and the digital key registered based on the deletion subject digital key; and
registering (S87), with the server processing circuitry (71), a new digital key (DKX) of the vehicle (20), the new digital key (DKX) being registered to a device (30C), to which the digital key (DK3) registered based on the deletion subject digital key (DK2) was registered, the deletion subject digital key (DK2) being deleted under a condition in which the specified condition (RC) is satisfied.

8. A program implemented by a non-transitory computer readable storage medium storing a program code that causes a computer to execute a deletion control process, wherein
the computer includes server processing circuitry (71) of a management server (70), and
the deletion management process includes:
managing, with the server processing circuitry (71), multiple digital keys to a vehicle (20);
deleting (S84, S85), with the server processing circuitry (71), under a condition in which a predetermined specified condition (RC) is satisfied (S64), a deletion subject digital key (DK2) and a digital key (DK3) registered based on the deletion subject digital key (DK2), the multiple digital keys including the deletion subject digital key and the digital key registered based on the deletion subject digital key; and
registering (S87), with the server processing circuitry (71), a new digital key (DKX) of the vehicle (20), the new digital key (DKX) being registered to a device (30C), to which the digital key (DK3) registered based on the deletion subject digital key (DK2) was registered, the deletion subject digital key (DK2) being deleted under a condition in which the specified condition (RC) is satisfied.
